# EUROPÄISCHE PATENTSCHRIFT

(11) **EP 0 410 936 B1**
(45) Veröffentlichungstag und Bekanntmachung des Hinweises auf die Patenterteilung: **30.03.1994**
(21) Anmeldenummer: 90810561.2
(22) Anmeldetag: 20.07.1990
(51) Int. Cl.: F16H 19/04, B61L 5/10

(54) **Verriegelungsantrieb**
Drive unit with latching device
Entraînement avec dispositif de verrouillage

(30) Priorität: 24.07.1989 CH 2755/89
(43) Veröffentlichungstag der Anmeldung: 30.01.1991
(73) Patentinhaber: SIEMENS INTEGRA VERKEHRSTECHNIK AG, 8304 Wallisellen (CH)
(72) Erfinder: Tedaldi, Enrico Valerio, CH-8932 Mettmenstetten (CH); Baumann, Eugen, CH-8303 Bassersdorf (CH)
(74) Vertreter: Schick, Carl

(56) Entgegenhaltungen:
- DE-A- 2 240 207
- GB-A- 523 361
- US-A- 2 771 782

## Beschreibung

Die vorliegende Erfindung betrifft einen Verriegelungsantrieb gemäss dem Oberbegriff des Patentanspruchs 1.

Aus der gattungsgemäßen Patentschrift US-2,771,782 ist ein Verriegelungsantrieb mit einer Zahnstange bekannt, welcher zur Kraftübertragung ein Ritzel umfasst, in dessen Verzahnung mehrere Zähne fehlen, so dass der Umfang des Ritzels zwei Zonen aufweist, von denen die eine vollkommen verzahnt und die andere vollkommen glatt ist. Die Zahnstange ist ebenfalls vollkommen verzahnt und weist je einen Gegenanschlag in der jeweiligen Endlage auf. Beide Gegenanschläge sind mit je einem Stift versehen, die gegen die Nocken der als Nockenwelle ausgebildeten Ritzelwelle wirken.

Solche Verriegelungsantriebe sind in Werkzeugmaschinen und Mechanismen aller Art anwendbar. So ist beispielsweise zum Umstellen von Eisenbahnweichen aus der DE-C 29 28 194 ein Weichenantrieb bekannt, bei dem die Kraft zum Bewegen eines Stellschiebers zwischen zwei Endlagen über einen Mitnehmer auf ein mit dem Stellschieber verbundenes Kuppelstück übertragen wird. Bei einem solchen Weichenantrieb ist es ohne weiteres möglich, den Stellschieber in den Endlagen mit Sicherheit zu sperren.

Im Hinblick auf die Gestaltung eines Fabrikationsprogramms, bei dem sowohl ein nicht aufschneidbarer, als auch ein aufschneidbarer Weichenantrieb mit möglichst vielen gemeinsamen Teilen vorgesehen werden kann, ist es daher Zweck der vorliegenden Erfindung, einen gattungsgemäßen Verriegelungsantrieb entsprechend weiterzubilden.

Diese Aufgabe wird erfindungsgemäss durch die im kennzeichnenden Teil des Patentanspruchs 1 angegebenen Massnahmen gelöst.

Vorteilhafte Ausgestaltungen der Erfindung sind in weiteren Ansprüchen angegeben.

Im folgenden wird anhand einer Zeichnung ein der Uebersichtlichkeit halber vereinfacht dargestelltes Ausführungsbeispiel nach der Erfindung näher erläutert. Es zeigt:
- Fig. 1: eine Draufsicht eines erfindungsgemässen Verriegelungsantriebs,
- Fig. 2: eine Seitenansicht eines solchen Verriegelungsantriebs, und
- Fig. 3: eine Draufsicht einer weiteren Ausführung des erfindungsgemässen Verriegelungsantriebs.

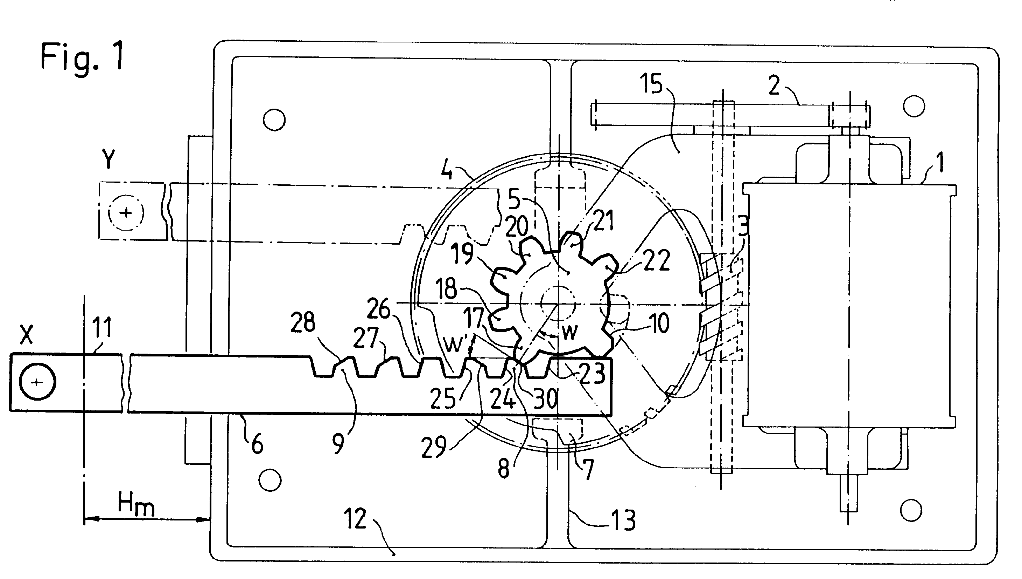

Der Weichenantrieb nach Fig. 1 weist einen Motor 1 auf, der über ein Vorgelege 2 und eine Schnecke 3 ein Schneckenrad 4 und ein koaxial mit ihm drehbares Ritzel 5 antreibt. Das Ritzel 5 arbeitet mit den Zähnen einer Zahnstange 6 zusammen, um eine Drehbewegung der Achse des Ritzels 5 als geradlinige Bewegung auf die Zahnstange 6 zu übertragen, die durch eine Zahnstangenführung 7 derart geführt ist, dass sie nur in Längsrichtung hin und her verschoben werden kann. In Fig. 1 ist die Zahnstange 6 beispielsweise mit fünf Zähnen dargestellt, wobei bei den zwei Zähnen rechts die rechte Flanke und bei den zwei Zähnen links die linke Flanke jeweils eine starke, als Stützfläche ausgebildete Abschrägung aufweisen. Im Sinne der Erfindung ist jedoch nur notwendig, dass der erste Zahn 8 und der letzte Zahn 9 eine solche Stützfläche aufweisen.

In der Version nach Fig. 1 ist das Ritzel 5 beispielsweise ein 9-Zahn-Ritzel mit nur sechs Zahnradzähnen und einem als Anschlag 10 ausgebildeten Zahn zwischen zwei ausfallenden Zähnen. Dabei sind andere Ausführungen möglich, bei denen durch Weglassen mindestens eines weiteren Zahnes eine Stellhubabstufung realisiert werden kann.

Die Zahnstange 6 streckt ihr linkes Ende 11 aus der linken Kante des Gehäuses 12 des Weichenantriebs nach links heraus. Dieses Ende 11 kann mit einer Antriebstange verbunden werden, um sie zu bewegen. Zur Verstärkung der Zahnstangenführung 7 ist im Gehäuse 12 eine Rippe 13 vorhanden.

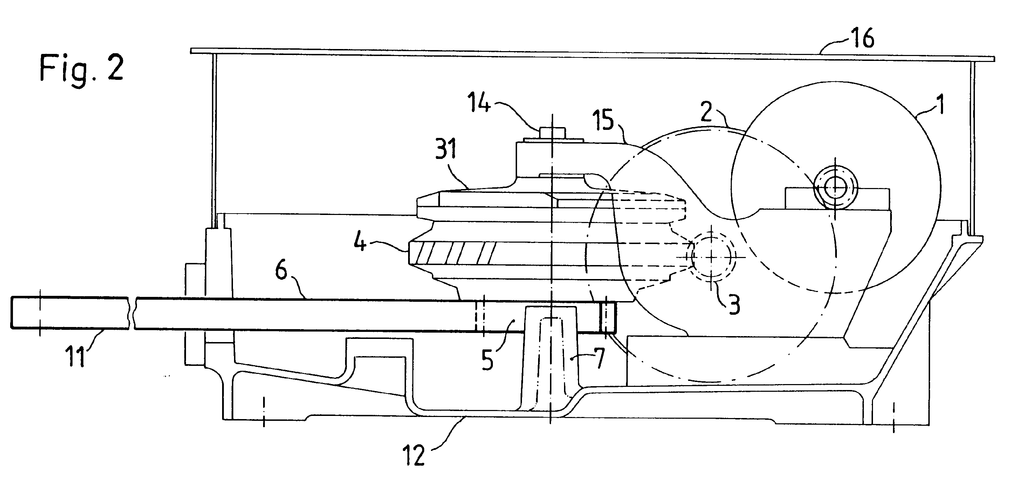

Aus Fig. 2 ist ersichtlich, dass die Achse 14 des Schneckenrades 4 und des Ritzels 5 unten am Gehäuse 12 und oben an einem zwei Arme aufweisenden Lagerbock 15 gelagert ist und dass der Weichenantrieb einen Deckel 16 für das Gehäuse 12 aufweist.

Der Weichenantrieb nach Fig. 1 und 2 arbeitet folgendermassen:

Eine Drehbewegung der Schnecke 3 um ihre horizontale Achse (Fig. 1) bewirkt beispielsweise eine Drehbewegung des Ritzels 5 gegen den Uhrzeigersinn, so dass die Zähne 17, 18, 19, 20, 21 und 22 in dieser Reihenfolge zur Verschiebung der Zahnstange 6 nach rechts beitragen. Dabei bewegt sich der Zahn 17, der gerade als Abstützzahn wirkt, gegen die Flanke 23, die die Abschlussflanke der Zahnstange 6 ist.

Der Zahn 17 drückt dann gegen die Flanke 23 und verschiebt somit die Zahnstange 6 nach rechts, bis der nächste Zahn 18 des Ritzels gegen die linke Flanke 24 des ersten Zahns 8 der Zahnstange 6 drückt, um sie weiter nach rechts zu verschieben. In gleicher Weise drücken dann nacheinander die Zähne 19 und 20 des Ritzels gegen die linken Flanken 25 bzw. 26 des zweiten bzw. dritten Zahnes der Zahnstange 6, um sie noch weiter nach rechts zu verschieben. Hätte der vierte Zahn der Zahnstange 6 nicht eine abgeschrägte Stützfläche 27, so würde der Zahn 21 genau gleich wie die anderen auf diesen vierten Zahn wirken. Die Abschrägung 27 dieses vierten Zahnes stört jedoch nicht viel, weil der Zahn 20 des Ritzels 5 immer noch gegen die Flanke 26 drückt. Somit kann trotz dieser Abschrägung 27 der Zahn 22 auf die Stützfläche 28 des Zahnes 9 und der Anschlag 10 auf die glatte obere Seite der Zahnstange 6 links vom Zahn 9 gelangen, um die Zahnstange 6 in einer zur Darstellung in Fig. 1 symmetrischen Position zu verriegeln. In der Ausführung nach Fig. 1 wäre es somit besser, wenn die Abschrägung 27 des vierten Zahnes und die rechte Abschrägung 29 des zweiten Zahnes nicht vorhanden sein würden. Die Erfahrung zeigt jedoch, dass diese Abschrägungen keine Nachteile darstellen, so dass ein und dieselbe Zahnstange mit verschiedenen Ritzeln zusammenarbeiten kann, die je nach Stellhub weniger Zähne als das Ritzel 5 gemäss Fig. 1 aufweisen. Wenn in Fig. 1 beispielsweise die Zahn- oder Stellstange 6 um einen Zahn nach rechts verschoben wäre, um in dieser Position durch den Zahn 17 über die Stützfläche 29 ihres zweiten Zahnes verriegelt zu werden, so könnte der Zahn 22 entfallen und der zweite Anschlag 10 um eine Zahnteilung versetzt angeordnet sein. Die Endstellen wären in diesem Fall durch die abgeschrägten Stützflächen 28 und 29 bestimmt. Da die Anschläge nur jeweils an der einen Flanke aktiv sind, kann der Raum zwischen zwei Anschlägen auch massiv ausgestaltet sein, was gewisse fertigungstechnische Vorteile mit sich bringt.

In Fig. 1 ist die abgeschrägte rechte Stützfläche 30 des ersten Zahns 8 der Zahnstange 6 durch den ersten Zahn 17 des Ritzels 5 und durch den Anschlag 10 derart verriegelt, dass die Zahnstange 6 sich nicht mehr von selbst nach rechts bewegen kann. In der anderen Endlage, wenn der Zahn 22 des Ritzels 5 gegen die Stützfläche 28 drückt, kann sich die Zahnstange 6 ebenfalls nicht mehr von selbst nach links bewegen. Die Bewegung ist nur durch Drehung des Ritzels 5 möglich.

In der Darstellung nach Fig. 1 befindet sich die Zahnstange 6 links (Anordnung X) vom Ritzel 5. Die Zahnstange kann jedoch auch rechts vom Ritzel (Anordnung Y) liegen. Je nach Anordnung des Weichenantriebs kann die eine oder andere Variante eingesetzt werden.

In Fig. 1 ist der Abstützwinkel W zwischen dem Radius des abstützenden Ritzelzahns 17 und der Vertikale derart dargestellt, dass die Neigung des Schrägdaches der abgeschrägten Zähne der Zahnstange 6 ebenfalls einen Winkel W' mit der Horizontale bilden. Falls das Ritzel ein 9-Zahn-Ritzel ist, kann vorzugsweise für den Winkel W ein Wert von ca. 34° bei einem Ritzelkopfdurchmesser von 124 mm gewählt werden.

Die abgeschrägten Stützflächen 27, 28, 29, 30 sind vorzugsweise etwas konkav ausgebildet, um eine gleichmässige Verteilung der Kraft in der Stützfläche zwischen einem Zahn der Zahnstange und dem abstützenden Ritzelzahn zu gewährleisten.

Die vorliegende Erfindung erlaubt diesen Mechanismus in einen aufschneidbaren Weichenantrieb umzuwandeln, indem man ein vollverzahntes Ritzel mit zugehöriger Stellstange verwendet.

Ein nichtaufschneidbarer Weichenantrieb gemäss der Erfindung erträgt eine sehr hohe Stellstangenbelastung mit Werten, die ohne weiteres im Bereich von 90 kN liegen.

In Fig. 2 ist ein Teil einer Reibkupplung 31 dargestellt, die eine Uebertragung der Kraft zwischen dem Schneckenrad 4 und dem Ritzel 5 ermöglicht, damit der Motor 1 weiterlaufen kann, wenn ein Hindernis, zum Beispiel ein Stein, die Bewegung der Zahnstange 6 blockiert.

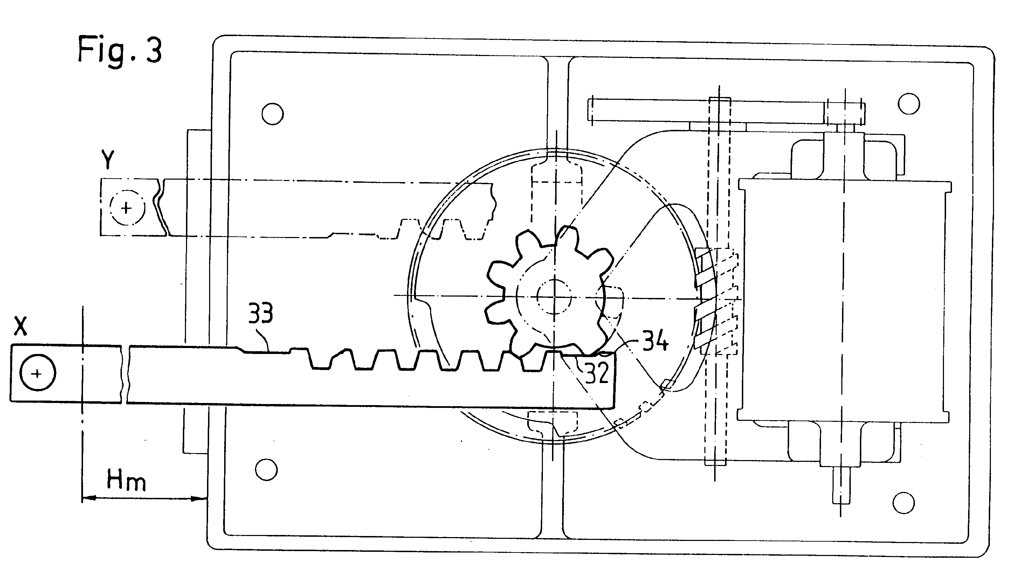

In weiterer Ausgestaltung der Erfindung kann die Stellstange Aussparungen oder Vertiefungen 32, 33 an den Endstellen der Verzahnung aufweisen. Dadurch besteht die Möglichkeit, die Stellstange in der jeweiligen Endlage in beiden Richtungen zu verriegeln. Der Anschlag des Ritzels kann somit in diesem Fall etwas vertieft in einer der Aussparungen 32 oder 33 liegen. Zu diesem Zweck kann der Anschlag breiter und/oder länger gemacht werden, wobei die mit einer Stützfläche 34 versehene Aussparung oder Vertiefung dem Anschlag angepasst ist. Die Zähnezahl der Stellstange entspricht der aktiven Zähnezahl des Ritzels minus 1. Nach Fig. 3 gilt für die Zähnezahl Zr des Ritzels Zr = 6 und für die Zähnezahl Zs der Stellstange Zs = 5.

Die am Anschlag wirkende Kraft kann kleiner als im Abstützzahn sein. Bei dieser Ausführung ist allerdings für jeden Stellhubweg eine separate Stellstange erforderlich. Während beispielsweise für die Ausführung mit einer Stellstange ohne die Vertiefungen 32, 33 bei gleichbleibender Position der Mittellage für 5 Stellhubwege wenigstens zwei Stellstangen erforderlich sind, braucht man für die Ausführung mit einer Stellstange mit den Vertiefungen 32, 33 je 1 Stange pro Stellhubweg.

Für die Abstützwinkel der Stützfläche 34 (Fig. 3) gelten vorzugsweise dieselben Bedingungen wie bei den Stützflächen 30 und 28 der Zähne 8 bzw. 9 (Fig. 1).

## Patentansprüche

1. Verriegelungsantrieb zum Umstellen eines Schiebers zwischen zwei Endlagen, bei dem zur Kraftübertragung eine mit einem Ritzel (5) zusammenwirkende Zahnstange (6) vorhanden ist, dadurch gekennzeichnet, daß die Zahnstange mindestens zwei Zähne mit je einer in entgegengesetzten Richtungen abgeschrägten Flanke aufweist, um je eine Stützfläche (28,30) für je einen abstützenden Zahn (17,22) des Ritzels (5) zu bilden, daß in der Verzahnung des Ritzels (5) je nach vorgegebenem Stellhubweg mindestens zwei Zähne fehlen, und daß sich zwischen den Stellen der fehlenden Zähne ein Anschlag (10) befindet, der in der jeweiligen Endlage jeweils mit einem unverzahnten Teil der Zahnstange zusammenarbeitet.

2. Verriegelungsantrieb nach Anspruch 1, dadurch gekennzeichnet, dass der Abstützwinkel (W) des abstützenden Zahnes (17) des Ritzels (5) in einer Endlage zumindest angenähert gleich dem Abschrägwinkel (W') der Stützfläche (30) des verriegelten Zahnes (8) der Zahnstange (6) ist.

3. Verriegelungsantrieb nach Anspruch 1 oder 2, dadurch gekennzeichnet, dass das Ritzel (5) je nach vorgegebenem Stellhubweg höchstens neun Zahnstellen, sechs vollständige Zähne (17,18,19,20,21,22) und den Anschlag (10) aufweist.

4. Verriegelungsantrieb nach einem der Ansprüche 1 bis 3, dadurch gekennzeichnet, dass die Stützfläche oder Stützflächen dem Kopfkreisradius des Ritzels (5) entsprechend konkav ausgebildet sind.

5. Verriegelungsantrieb nach einem der Ansprüche 1 bis 4, dadurch gekennzeichnet, dass die Zahnstange (6) eine Vertiefung (32,33) in mindestens einem Endbereich der Verzahnung aufweist, und dass der Anschlag derart ausgebildet ist, dass er zusammen mit einer der Vertiefungen (32;33) eine zusätzliche Verriegelung in der anderen Richtung bewirkt.

6. Verriegelungsantrieb nach einem der Ansprüche 2 bis 5, dadurch gekennzeichnet, dass der Abstützwinkel (W) und die Form des Anschlags (10) derart gewählt sind, dass die sich senkrecht zur Stützfläche (30) des verriegelten Zahnes (8) der Zahnstange (6) ergebende Kraftkomponente durch das Zentrum des Ritzels (5) verläuft, um ein einwandfreies Ein- und Auslaufen zu gewährleisten.

7. Verriegelungsantrieb nach einem der Ansprüche 1 bis 6, dadurch gekennzeichnet, dass er als Weichenantrieb zum Umstellen von Bahnweichen zwischen zwei Endlagen dient.

## Claims

1. Latching drive for changing over a slide between two end positions, in which a rack (6) is present, co-operating with a pinion (5) for transmitting the force, characterised in that the rack has at least two teeth each having a chamfered flank in opposite directions, in order to form a respective abutment face (28, 30) for a respective abutting tooth (17, 22) of the pinion (5), that at least two teeth are missing, according to the prescribed stroke/length, in the teeth of the pinion (5), and that there is present between the positions of the missing teeth a stop (10) which co-operates with an untoothed part of the rack in each respective end position.

2. Latching drive according to claim 1, characterised in that the abutment angle (W) of the abutting tooth (17) of the pinion (5) is at least approximately equal to the angle of chamfer (W') of the abutment face (30) of the latched tooth (8) of the rack (6).

3. Latching drive according to claim 1 or 2, characterised in that the pinion (5) has at most nine tooth positions, according to the stroke length required, with six full teeth (17, 18, 19, 20, 21, 22) and the stop (10).

4. Latching drive according to one of claims 1 to 3, characterised in that the abutment face or faces is or are made concave to match the head circle radius of the pinion (5).

5. Latching drive according to one of claims 1 to 4, characterised in that the rack (6) has a recess (32, 33) in at least one end region of the teeth, and that the stop is made such that it effects, together with one of the recesses (32; 33) an additional latching locking against movement in the other direction.

6. Latching drive according to one of claims 2 to 5, characterised in that the abutment angle (W) and the shape of the stop (10) are selected such that the resulting force component perpendicular to the abutment face (30) of the latched tooth (8) of the rack (6) extends through the centre of the pinion (5) in order to achieve trouble-free entry and departure.

7. Latching drive according to one of claims 1 to 6, characterised in that it serves as a switch points drive for changing over railway switch points between two end positions.

## Revendications

1. Entraînement avec dispositif de verrouillage pour régler un coulisseau entre deux positions d'extrémité, dans lequel, pour transmettre la force, on prévoit une crémaillère (6) coopérant avec un pignon (5), caractérisé en ce que la crémaillère comprend au moins deux dents comportant chacune un flanc biseauté dans des directions opposées pour former respectivement une surface d'appui (28, 30) pour une dent respective (17, 22) du pignon (5) qui s'y appuie, en ce que dans la denture du pignon (5) manquent au moins deux dents en fonction de la course de réglage prédéterminée, et en ce qu'entre les positions des dents manquantes est prévue une butée (10) qui coopère dans chaque position d'extrémité avec une partie non dentée de la crémaillère.

2. Entraînement avec dispositif de verrouillage selon la revendication 1, caractérisé en ce que l'angle d'appui (W) de la dent en appui (17) du pignon (5) est, dans une position d'extrémité, au moins approximativement égal à l'angle de biseau (W') de la surface d'appui (30) de la dent verrouillée (8) de la crémaillère (6).

3. Entraînement avec dispositif de verrouillage selon la revendication 1 ou 2, caractérisé en ce que le pignon (5) comprend en fonction de la course de réglage prédéterminée au maximum neuf positions de dents, six dents complètes (17, 18, 19, 20, 21, 22) et la butée (10).

4. Entraînement avec dispositif de verrouillage selon l'une des revendications 1 à 3, caractérisé en ce que la ou les surfaces d'appui est ou sont de constitution concave correspondant au rayon du cercle de tête du pignon (5).

5. Entraînement avec dispositif de verrouillage selon l'une des revendications 1 à 4, caractérisé en ce que la crémaillère (6) comprend un enfoncement (32, 33) dans au moins une région d'extrémité de la denture, et en ce que la butée est constituée de manière à déterminer avec l'un des enfoncements (32, 33) un verrouillage additionnel dans l'autre direction.

6. Entraînement avec dispositif de verrouillage selon l'une des revendications 2 à 5, caractérisé en ce que l'angle d'appui (W) et la forme de la butée (10) sont choisis de manière que la composante de force qui est perpendiculaire à la surface d'appui (30) de la dent verrouillée (8) de la crémaillère (6) passe par le centre du pignon (5) pour assurer un mouvement d'entrée et de sortie sans problème.

7. Entraînement avec dispositif de verrouillage selon l'une des revendications 1 à 6, caractérisé en ce qu'il sert à l'entraînement d'aiguillages pour déplacer des aiguillages de chemins de fer entre deux positions d'extrémité.
